(19) Europäisches Patentamt
European Patent Office
Office européen des brevets

(11) **EP 2 652 017 B1**

(12) **FASCICULE DE BREVET EUROPEEN**

(45) Date de publication et mention
de la délivrance du brevet:
**07.11.2018 Bulletin 2018/45**

(21) Numéro de dépôt: **11794765.5**

(22) Date de dépôt: **14.12.2011**

(51) Int Cl.:
***C08J 7/12*** *(2006.01)* ***B60S 1/38*** *(2006.01)*

(86) Numéro de dépôt international:
**PCT/EP2011/072743**

(87) Numéro de publication internationale:
**WO 2012/080322 (21.06.2012 Gazette 2012/25)**

(54) **PROCÉDÉ DE FABRICATION D'UNE JUMELLE D'ORGANES D'ESSUYAGE**

VERFAHREN ZUR HERSTELLUNG EINES WISCHERELEMENTPAARS

METHOD FOR PRODUCING A PAIR OF WIPING MEMBERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2010 FR 1004904**

(43) Date de publication de la demande:
**23.10.2013 Bulletin 2013/43**

(73) Titulaire: **Valeo Systèmes d'Essuyage
78322 Le Mesnil Saint Denis (FR)**

(72) Inventeurs:
• **BRAUN, Alexis
F- 63114 Coudes (FR)**
• **BRETAGNOL, Frédéric
F-63500 Issoire (FR)**
• **DOUPEUX, Severin
F-63500 Issoire (FR)**

(74) Mandataire: **Callu-Danseux, Violaine
Valeo Systèmes d'Essuyage
Service Propriété Industrielle
ZA L'Agiot
8 Rue Louis Lormand
CS 90581 La Verrière
78322 Le Mesnil Saint Denis (FR)**

(56) Documents cités:
**EP-A2- 0 264 227      US-A1- 2002 164 422
US-B1- 6 287 642**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un organe d'essuyage d'une surface à essuyer, en particulier une lame de balai d'essuie-glace pour véhicule automobile, l'organe comportant un matériau à base d'élastomère(s) présentant un traitement de surface spécifique. L'invention concerne également un procédé d'obtention de cet organe et l'utilisation de celui-ci.

Dans le domaine des matériaux techniques à base d'élastomères, la recherche s'oriente souvent vers une amélioration des propriétés mécaniques et/ou de l'aspect de surface des pièces mises en forme à partir de ces matériaux.

Dans le cas de lames d'essuyage pour balai d'essuie-glace de véhicule automobile, ces lames doivent présenter certaines caractéristiques, en particulier en surface, permettant un essuyage efficace du pare-brise sur lequel elles se déplacent. Ces lames doivent également présenter un confort sonore en utilisation pour l'occupant du véhicule automobile, c'est-à-dire éviter de générer des ondes sonores, donc du bruit.

On connait de l'état de la technique un procédé de fabrication d'une lame d'essuyage en matériau à base d'élastomère(s) dans lequel on traite la lame par bombardement ionique afin de durcir le matériau à base d'élastomère(s) sur une épaisseur superficielle. On citera par exemple US 2002/0164422 Ce traitement permet d'obtenir une lame ayant des propriétés de surface améliorées par rapport à un traitement par halogénation qui est peu respectueux de l'environnement (ex: consommation d'eau, de soude, ...) et qui introduit des atomes d'halogènes qui sont fixés de manière covalente à l'élastomère, notamment par addition nucléophile sur les insaturations des chaînes carbonées, ce qui confère à la surface du matériau une nature plus hydrophile qui tend à capturer l'eau et qui peut provoquer un léger brouillard lors de leur fonctionnement et donc diminuer la visibilité du conducteur du véhicule. Enfin, l'halogénation n'est pas toujours réalisable sur les élastomères ne présentant pas ou peu d'insaturations sur leurs chaînes carbonées comme les silicones ou les caoutchouc EPDM.

Toutefois, ce traitement par bombardement ionique est coûteux et présente des difficultés de mise en oeuvre car on bombarde séparément chaque lame, notamment si on souhaite localiser le traitement sur la tranche d'essuyage.

Or, dans un dispositif de traitement de jumelle avec une refente réalisée après le traitement de surface, on ne bénéficie plus de l'avantage obtenu en traitant tout ou partie de la tranche d'essuyage qui est la partie en contact avec le pare-brise.

En outre, il serait souhaitable de disposer d'un traitement des lames efficace permettant de limiter notablement, voire d'éliminer la génération d'ondes sonores par celles-ci lors de leur utilisation.

L'invention a pour but de fournir un procédé de fabrication plus simple et un organe permettant d'améliorer le confort sonore de l'occupant du véhicule.

A cet effet, l'invention a pour objet un procédé de fabrication d'un organe selon la revendication 1.

Le procédé selon l'invention permet de traiter de façon continue une jumelle d'organes d'essuyage. Il n'est pas nécessaire, contrairement au procédé de l'état de la technique de traiter individuellement chaque organe, d'où un gain de temps. Chaque entaille permet ainsi un traitement de surface de la tranche d'essuyage sans avoir à désolidariser les deux organes l'un de l'autre.

En outre, grâce au procédé de l'invention, il est possible de traiter facilement la surface externe de l'entaille qui est destinée à former la surface qui sera en contact avec la surface à essuyer. En effet, le traitement de la surface de l'entaille permet de générer une réticulation accrue sur une épaisseur superficielle de la surface externe. On garantit ainsi une résistance accrue sur les parties de l'organe d'essuyage les plus sollicitées mécaniquement.

Le traitement par bombardement ionique s'effectue à l'aide d'un dispositif comportant un générateur d'ions et un applicateur d'ions tels que par exemple ceux décrits dans FR-A-2 899 242 ou US20060042745

L'applicateur d'ions comprend habituellement des moyens choisis par exemple parmi des lentilles électrostatiques de mise en forme de faisceau d'ions, un diaphragme, un obturateur un collimateur un analyseur de faisceau d'ions et un contrôleur de faisceau d'ions.

Le générateur d'ions comprend habituellement des moyens choisis par exemple parmi une chambre d'ionisation, une source d'ions à filament ou à résonance cyclotronique électronique ou un système à plasma impulsionel, un accélérateur d'ions et dans certains cas, un séparateur d'ions.

Le bombardement ionique est généralement réalisé sous vide. Par exemple, FR-A-2 899 242 propose de loger l'ensemble des moyens de bombardement ionique (générateur d'ions et applicateur d'ions) ainsi que l'objet à traiter dans une chambre à vide. Des moyens de mise sous vide sont raccordés à cette chambre. Ces moyens de mise sous vide doivent permettre d'obtenir un vide relativement poussé dans la chambre, par exemple de l'ordre de $10^{-2}$ mbar à $10^{-6}$ mbar.

Avantageusement, le bombardement ionique est effectué au moyen de faisceaux d'ions mono ou multi-énergie(s) issus de gaz tels que l'hélium, le néon, le krypton, l'argon, le xénon, le dioxygène ou le diazote, seuls ou en mélange. De préférence, le diazote et/ou l'hélium, seuls ou en mélange, préférentiellement le diazote.

De préférence, le bombardement d'ions s'effectuera à une pression comprise entre 1 mbar et $10^{-5}$ mbar, de préférence, entre $10^{-2}$ mbar et $5.10^{-4}$ mbar, et transmettant au matériau une énergie de l'ordre de 0,1 à 100 keV, de préférence de 0,3 à 30 keV.

Selon un exemple avantageux, on implante, dans le matériau, entre $10^{14}$ et $10^{16}$ ions/cm$^2$.

Par « élastomère(s) », on entend un polymère présentant des propriétés « hyper-élastiques », obtenues après réticulation du polymère. Ces élastomères comprennent des élastomères naturels ou synthétiques, seuls ou en mélange, en particulier les élastomères choisis parmi le groupe constitué par les caoutchoucs naturels (NR), les polychloroprènes (CR), les éthylène-propylène-diène monomères (EPDM), les caoutchoucs nitriles (NBR, HNBR, XNBR), les polybutadiènes (BR), les caoutchoucs butyles, les épichlorhydrines (ECO/GECO), les copolymères d'éthylène-acrylate (type VAMAC), les polyuréthanes (PU), les élastomères fluorés et les élastomères silicone (VMQ/FMQ). Ces élastomères peuvent être utilisés seul ou en mélange. A titre d'exemple, on cite les mélanges NR/EPDM, NR/CR, EPDM/PP ou d'autres mélanges connus par l'homme de métier.

De préférence, les élastomères sont choisi parmi le groupe constitué par les NR, les EPDM, les CR et les mélanges à base de ces élastomères.

Par «à base de», on entend un matériau comportant au moins 10% d'élastomère(s), de préférence, au moins 20%, plus préférentiellement, au moins 35%. En effet, le matériau comprend au moins un élastomère de base, synthétique ou naturel, ainsi que différentes charges et/ou additifs pour assurer ses performances mécaniques et sa compatibilité avec des environnements climatiques variés.

Les charges utilisées pour le matériau sont généralement du noir de carbone, du graphite, de la silice, du talc ou une craie ainsi que leurs dérivés et/ou mélanges.

Les additifs comprennent entre autres des agents de protection, par exemple des dérivés des paraphénylènediamines qui piègent les UV. Les additifs comprennent également des cires qui migrent en surface pour protéger le matériau. De plus, les additifs peuvent comprendre des plastifiants pour améliorer la tenue à froid et la mise en oeuvre de l'élastomère. Les plastifiants les plus couramment utilisés sont l'huile naphténique, l'huile aromatique, l'huile parrafinique ou l'huile ester. Les additifs comprennent un système de vulcanisation, par exemple comprenant du soufre et/ou différentes molécules améliorant l'efficacité de la réaction ou des dérivés de peroxydes.

Avantageusement, on dépose un revêtement visant à réduire la friction sur une surface externe de la jumelle d'organes après l'étape de traitement par bombardement ionique.

Ainsi, on dépose, sur le matériau à base d'élastomère, un revêtement comprenant au moins un liant et/ou au moins une charge. Ce revêtement permet de réduire la friction entre l'organe d'essuyage et la surface à essuyer et donc de maintenir la qualité d'essuyage du balai plus longtemps. A titre d'exemple, le revêtement utilisé pour être celui défini dans l'exemple du brevet US 5883168.

Le ou les liants comprennent un polymère dont la fonction est de retenir les charges glissantes, tel que le graphite ou autre particules lubrifiantes, sur l'organe d'essuyage. Il est incorporé sous forme de suspension, de dispersion ou de poudre en fonction du mode d'application du revêtement. Le polymère du liant est choisi parmi les dérivés acryliques, les dérivés styrène acrylique, les acrylonitriles et leurs dérivés, les polyuréthanes de type ester ou éther et leurs leurs dérivés et le polychlorure de vinyle (PVC). Le liant peut également comprendre au moins un élastomère fluoré ainsi que des silicones ou siloxanes. Les latex élastomériques peuvent également être employés ainsi que les poudres de polyamide, de polyéthylène ou de polypropylène. Le liant peut également comprendre au moins un agent de réticulation du type mélamines, isocyanate ou époxy pour conférer des propriétés de résistance mécanique et chimique accrues au revêtement ainsi que de la cire pour améliorer l'imperméabilité du film formé par les liants.

La ou les charges introduites dans le revêtement permettent d'abaisser le coefficient de friction de l'organe d'essuyage. Usuellement, on utilisera du graphite, du disulfure de molybdène (MoS$_2$), du talc, du polytétrafluoroéthylène (PTFE) tel que celui commercialisé sous la marque Teflon®, des particules de polyéthyène à poids moléculaire « ultra haut » (Ultra High Molecular Weight Polyethylene - UHMWPE), du polyéthylène, du polypropylène, des silicones, des charges nanostructurées comme les fullerènes, les nanotubes de carbones (CNT) ou leurs mélanges.

L'incorporation de ces charges dans une matrice liquide sera facilitée par des agents de dispersion comme par exemple des polyacrylates. Des agents épaississants évitant leur sédimentation sont également souvent requis.

De préférence, le revêtement comprend du graphite. Le graphite est, par exemple, sous forme de poudre dispersée dans une matrice. La présence de graphite permet d'améliorer la réduction de la friction entre l'organe et la surface à essuyer et donc d'améliorer le confort sonore de l'occupant du véhicule.

Selon une caractéristique optionnelle du procédé, les organes de la jumelle étant mobiles l'un par rapport à l'autre entre une position d'ouverture de l'entaille dans laquelle la partie de la surface externe est exposée au traitement par bombardement ionique et une position de fermeture de l'entaille dans laquelle la partie de la surface externe est masquée, on traite par bombardement ionique la partie de la surface externe de l'entaille dans la position d'ouverture.

Ainsi, en positionnant l'entaille en position d'ouverture, on expose la plus grande surface possible de l'entaille au bombardement ionique. On traite ainsi aussi bien l'intérieur de l'entaille que les portions des faces latérales de l'organe situées au voisinage de l'entaille.

De préférence, après l'étape de bombardement ionique ou de dépôt du revêtement, le procédé comporte une étape de refente de la jumelle. On obtient alors deux organes d'essuyage indépendants.

L'invention a également pour objet une jumelle d'organes d'essuyage selon la revendication 6.

La réticulation est définie comme une densification des liaisons entre les chaines macromoléculaires constituant le polymère. Par « réticulation accrue », on entend un degré de réticulation supérieur à celui du ou des polymère(s) présent(s) dans le reste du matériau. En général, le degré de réticulation du ou des polymère(s) présent(s) dans le reste du matériau correspondra au degré de réticulation obtenu dans les conditions usuelles de vulcanisation ou de réticulation chimique du ou des polymère(s), c'est-à-dire, sans traitement spécifique additionnel du ou des polymère(s). On peut également utiliser le terme « sur-réticulé ».

Pour un polymère donné, le degré de réticulation D peut être mesuré par la solubilité dans un solvant du polymère ou des polymères. Le polymère étant soluble dans le solvant, les parties réticulées seront, elles, insolubles.

En considérant uniquement la masse de l'épaisseur superficielle du polymère :

$$D = \text{poids du polymère traité insoluble dans un solvant / poids total du polymère.}$$

Par exemple, le degré de réticulation du NBR peut être mesuré comme suit :

$$D = \text{poids du NBR insoluble dans le métacrésol ou l'acide formique / poids total de NBR.}$$

Selon un exemple avantageux, le degré de réticulation de l'élastomère de l'organe dans l'épaisseur superficielle est supérieur de 10% à celui du ou des polymère(s) présent(s) dans le reste du matériau à base d'élastomère, de préférence, de 50%, plus préférentiellement, de 95%.

La réticulation du matériau peut être mise en évidence également par DSC (Differential Scanning Calorimetry). Une comparaison du matériau traité et non traité met en évidence que l'accroissement du degré de réticulation du matériau a pour effet de faire disparaître la température de transition vitreuse « $T_g$ » (changement endothermique de capacité calorifique).

La réticulation accrue est obtenue au moyen d'un bombardement ionique d'énergie suffisante pour générer des recombinaisons dans la matière et accroître les pontages covalents. On obtient une réticulation dont l'intensité de réticulation est supérieure à celle obtenue par d'autres moyens comme la réticulation au moyen d'un agent chimique. Par ailleurs, elle est indépendante de la nature chimique du polymère à irradier. Par exemple, elle sera efficace aussi bien sur un polymère à base de silicone que sur un polymère acrylique ou un polyuréthane.

On entend par « épaisseur superficielle », une épaisseur localisée en surface du matériau. Avantageusement, cette épaisseur est inférieure à 3 μm en partant de la surface externe du revêtement, plus préférentiellement inférieure 1 μm. Selon un autre exemple avantageux, l'épaisseur superficielle est égale ou supérieure à 3 μm et inférieure à 5 μm.

La réticulation accrue de cette épaisseur superficielle permet une augmentation de la dureté et de la résistance à l'abrasion en particulier du revêtement et/ou du matériau. Un des effets de cette augmentation de dureté est de réduire le bruit que l'organe est susceptible de produire en frottant sur la surface à essuyer. L'organe selon l'invention permet donc d'améliorer le confort sonore de l'occupant du véhicule.

Un autre effet de cette réticulation accrue est d'augmenter la résistance à l'abrasion de l'organe selon l'invention et par conséquent sa durée de vie. De plus, l'épaisseur superficielle présentant une réticulation accrue forme une barrière qui empêche la migration d'espèces chimiques, notamment les espèces utilisées dans les produits lave-glace ou lave-vitre, vers l'intérieur de l'organe. Or, ces espèces chimiques peuvent dégrader le matériau à base d'élastomère(s).

L'invention a pour autre objet un organe d'essuyage comportant un matériau à base d'élastomère(s), susceptible d'être obtenue par le procédé tel que défini ci-dessus.

Des organes d'essuyage plus particulièrement visés par l'invention sont une lame de balai d'essuie-glace.

L'invention a pour objet un dispositif d'essuyage comportant un organe d'essuyage tel que défini ci-dessus. Il s'agit plus particulièrement d'une lame de balai d'essuie-glace, en particulier pour véhicule automobile.

Par exemple, une lame de balai d'essuyage est usuellement composée de trois éléments :

- une lèvre assurant le contact avec le pare-brise et assurant le joint d'étanchéité permettant l'essuyage de l'eau,
- un talon de forme généralement rectangulaire permettant d'insérer la lame dans le balai et,
- une charnière (optionnelle) formée par une fine bande de caoutchouc située entre la lèvre et le talon et assurant le bon positionnement de la lèvre sur le pare-brise, notamment lors du changement de direction du balai aux points de retournement.

On notera que le balai peut être, soit un balai classique, soit un balai plat.

Par « balai classique », on entend un balai dons la répartition de pression imprimée par le bras supportant le balai est assurée par des palonniers répartis le long du balai.

Alors que pour un « balai plat », la répartition de pression imprimée par le bras supportant le balai est assurée par une vertèbre métallique ayant une courbure et une pression calculée. Ainsi, on peut supprimer les palonniers du bras ce qui permet une réduction de la hauteur du balai.

L'invention concerne également l'utilisation de l'organe tel que défini ci-dessus pour diminuer les nuisances sonores pouvant être produites lors de la friction d'un organe d'essuyage avec la surface à essuyer.

En effet, lorsque l'organe d'essuyage se déplace sur la surface à essuyer, par exemple sur un pare-brise ou contre une vitre, les frictions entre l'organe et la surface à essuyer peuvent générer des ondes sonores qui nuisent au confort des occupants du véhicule.

Avantageusement, les organes décrits précédemment permettent de réduire ces bruits. En effet, ces organes se déforment moins sous les forces de friction car ils sont plus durs et que la friction entre l'organe et la surface à essuyer est optimisée.

Un tel procédé peut être mis en oeuvre par une Installation de traitement par bombardement ionique d'une jumelle d'organes d'essuyage joints entre eux, la jumelle étant pré-refendue par une entaille visant à permettre une séparation ultérieure des organes l'un de l'autre, caractérisé en ce que l'installation comprend:

- un dispositif de génération d'un faisceau d'ions en vue d'effectuer un bombardement ionique, et
- un dispositif de positionnement d'au moins une partie d'une surface externe de l'entaille de la jumelle par rapport au dispositif de génération du faisceau d'ions.

D'autres caractéristiques et avantages de l'invention seront décrits dans les exemples qui suivent.

L'invention sera mieux comprise à la lecture de la description qui va suivre, donnée uniquement à titre d'exemple non limitatif et faite en se référant aux dessins dans lesquels :

- les figures 1a et 1b présentent respectivement des vues schématiques en perspective d'un balai d'essuie-glace classique et d'un balai d'essuie-glace plat selon l'invention;
- la figure 2 est une vue en perspective d'une coupe d'un organe d'essuyage selon l'invention;
- la figure 3 illustre une installation de fabrication d'un organe d'essuyage permettant la mise en oeuvre selon l'invention;
- la figure 4 est une vue en coupe transversale d'une jumelle d'organes d'essuyage avant pré-découpage,
- la figure 5 est une vue en coupe transversale d'une jumelle d'organes d'essuyage après pré-découpage,
- la figure 6 est une vue de détail de la jumelle de la figure 5,
- la figure 7 est une vue de la jumelle de la figure 6 après une étape de bombardement ionique,
- la figure 8 est une vue en coupe transversale d'une jumelle d'organes d'essuyage pendant une étape de bombardement ionique
- la figure 9 est une vue en coupe transversale d'une jumelle d'organes d'essuyage après pré-découpage, sans élément sacrificiel.

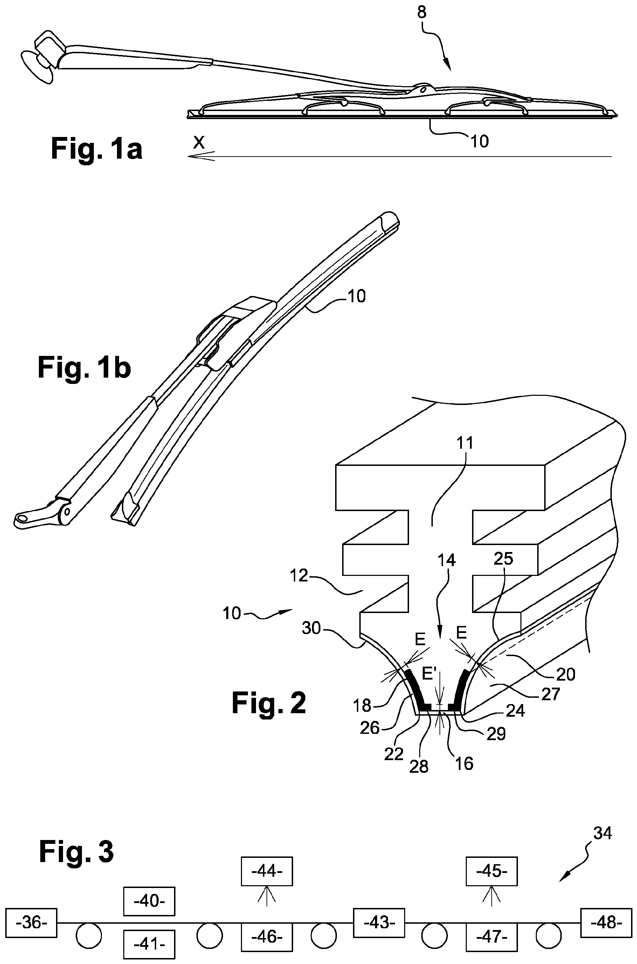

On a représenté sur les figures 1a et 1b un balai d'essuie-glace classique (figure 1a) et un balai d'essuie-glace plat (figure 1b) selon l'invention et désignés par la référence générale 8. Le balai 8 comprend un organe d'essuyage 10. L'organe 10 est une lame de balai d'essuie-glace.

On a représenté sur la figure 2 l'organe 10. L'organe 10 présente une forme classique s'étendant selon une direction principale X. L'organe 10 comprend un talon 11 de fixation au balai d'essuie-glace, une charnière 12 et une lèvre 14 d'essuyage d'une surface à essuyer. La lèvre 14 comprend une face frontale 16 d'essuyage et des première et deuxième faces latérales 18, 20 d'essuyage. L'intersection de chaque première et deuxième faces latérales 18, 20 avec la face frontale 16 définit respectivement une arête 22, 24 d'essuyage.

L'organe 10 comprend un matériau M à base d'élastomère(s), par exemple du caoutchouc naturel présentant une surface externe 25. Chaque face latérale 18, 20 comprend respectivement une partie latérale 26, 27 sur laquelle le matériau à base d'élastomère(s) comporte une épaisseur superficielle E présentant une réticulation accrue. De façon analogue, la face frontale 16 comprend deux parties frontales 28, 29 sur laquelle le matériau à base d'élastomère(s) comporte une épaisseur superficielle E' présentant une réticulation accrue. De préférence, E est sensiblement égal à E'. L'intersection de chaque partie 26, 27 avec chaque partie 28, 29 définit respectivement chaque arête 22, 24 d'essuyage.

L'organe 10 comprend également un revêtement 30 d'au moins une partie de la surface externe 25 de la lèvre 14. Le revêtement 30 vise à réduire la friction de l'organe 10 avec la surface à essuyer.

On va maintenant décrire un procédé de fabrication de l'organe 10 de la figure 2. L'organe 10 est susceptible d'être obtenu par ce procédé de fabrication.

On a représenté sur la figure 3 une installation 34 de fabrication de l'organe 10. L'installation 34 comprend un dispositif d'extrusion 36 d'une jumelle 38 réalisée en matériau à base d'élastomère(s). L'installation 34 comprend également deux dispositifs de pré-découpage 40, 41 de la jumelle 38 et un dispositif 43 de retournement de la jumelle 38. L'installation 34 comprend des dispositifs 44, 45 de génération d'un faisceau d'ions en vue d'effectuer un bombardement ionique sur la jumelle 38. L'installation 34 comprend deux dispositifs 46, 47 de positionnement de la jumelle 38 par rapport à chaque dispositif 44, 45 respectivement. L'installation comprend enfin un dispositif 48 de découpage de la jumelle 38. L'installation comprend également des moyens de déplacement et de guidage (non représentés) de la jumelle 38 extrudée.

Dans une étape d'extrusion classique, on extrude le matériau à base d'élastomère(s) afin d'obtenir la jumelle 38 au moyen du dispositif d'extrusion 36. La jumelle 38 est venue de matière dans le matériau à base d'élastomère(s). Après extrusion, on vulcanise la jumelle 38.

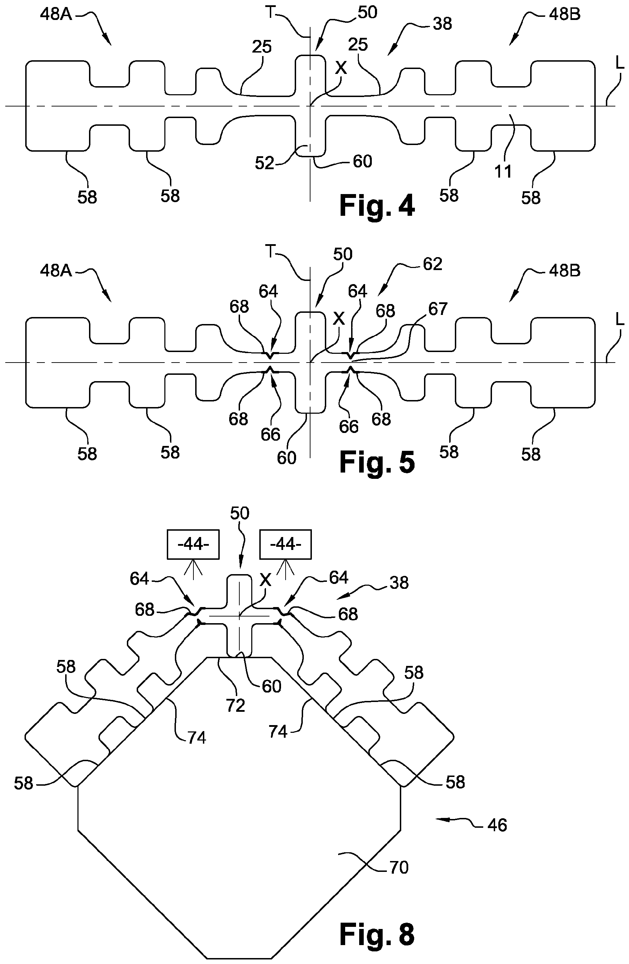

On a représenté sur la figure 4 la jumelle 38 comprenant deux organes 48A, 48B nus et non traités destinés à former deux organes d'essuyage 10 traités et revêtus. Les organes 48A, 48B sont sensiblement identiques et reliés mécaniquement entre eux par un élément de liaison sacrificiel 50 comprenant un jambage central 52. La jumelle 38 est sensiblement symétrique par rapport à deux plans médian transversal T et longitudinal L sensiblement parallèles à la direction principale X de chaque organe 10. Chaque talon 11 et le jambage central 52 comprennent respectivement des surfaces d'appui 58, 60 de la jumelle 38.

Puis, dans une étape de pré-refente, on pré-découpe l'élément de liaison 50 de part et d'autre du plan longitudinal L entre chaque organe d'essuyage 48A, 48B nu et non traité et le jambage central 52 au moyen du dispositif de pré-découpage 40 comprenant par exemple, des lames de pré-découpe fixe, des lames rotatives ou des lames de rasoir. La précision du dispositif de pré-découpage 40 présente une précision de 0,10 mm, voire inférieure à 0,05 mm ce qui permet d'ajuster la profondeur des entailles. L'étape de pré-découpe est réalisée de façon continue par déplacement de la jumelle 38 au contact des lames des dispositifs 40, 41. A cet effet, les moyens de déplacement de la jumelle 38 comprennent des rouleaux d'entraînement de la jumelle.

On obtient alors la jumelle pré-découpée 62 représentée à la figure 5. La jumelle pré-découpée 62 comprend ainsi quatre entailles 64, 66 symétriques deux à deux par rapport aux plans médian transversal T et longitudinal L. Les entailles 64 sont disposées du côté opposé aux entailles 66 par rapport au plan médian longitudinal T. Chaque entaille 64, 66 présente une surface externe 68 destinée à être traitée par bombardement ionique.

Ces entailles 64, 66 sont séparées par un «pont» de matière résiduel 67 suffisamment résistant pour permettre une manipulation de la jumelle 38 sans que les deux organes 10 ne se séparent. Ce pont de matière 67 mesure généralement entre 0,02 et 0,2 mm, préférentiellement entre 0,05 et 0,1 mm afin de garantir une séparation facile des organes 10 tout en garantissant une bonne cohésion de la jumelle pré-découpée dans le procédé

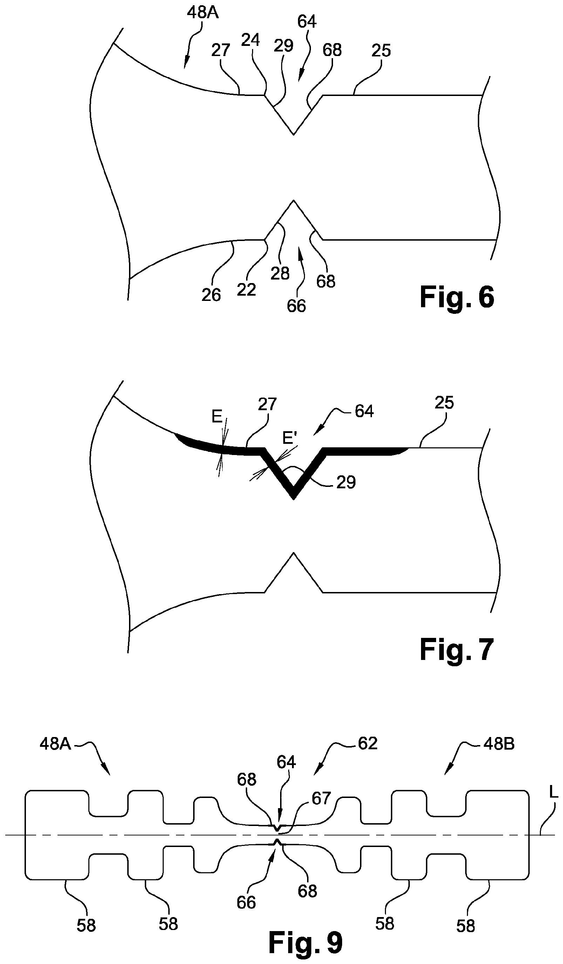

On a représenté sur la figure 6 un agrandissement d'une partie de l'organe 48A nu et non traité comprenant les entailles 64, 66. Chaque surface externe 68 comprend une des parties frontales 28, 29 et une des parties latérales 26, 27 définissant une des arêtes d'essuyage 22, 24. Cette surface externe 68 présente une forme générale en V.

Chaque organe 48A, 48B nu et non traité de la jumelle 38 est mobile par rapport à l'autre organe 48A, 48B nu et non traité entre une position d'ouverture de l'entaille dans laquelle la surface externe 68 est exposée au traitement par bombardement ionique et une position de fermeture de l'entaille dans laquelle la surface externe 68 de l'entaille est masquée.

Ensuite, dans une première étape de positionnement de la jumelle 38 par rapport aux dispositifs 44 de génération d'un faisceau d'ions, on déplace chaque organe 10 nu et non traité l'un par rapport à l'autre au moyen du dispositif de positionnement 46. A cet effet, le dispositif de positionnement 46 est agencé de sorte que la surface externe 68 des entailles 64 à traiter par bombardement ionique soit exposée au faisceau d'ions généré par le dispositif 44. En l'espèce, le dispositif 46 comprend un support 70 présentant une surface de support 72 de la surface d'appui 60 du jambage central et deux surfaces de support 74 de chaque surface d'appui 58 de chaque talon 11. Chaque surface de support 74 forme un angle prédéterminé avec la surface de support 72. Cet angle est compris entre 20° et 60°, en l'espèce l'angle est sensiblement égal à 45°.

En l'espèce et comme représenté sur la figure 8, les entailles 64 sont dans la position d'ouverture et les entailles 66 sont dans la position de fermeture. Dans la position d'ouverture de la figure 8, chaque surface externe 68 de chaque entaille 66 définit un angle sensiblement égale à 45°.

Puis, dans une première étape de traitement par bombardement ionique, on traite par bombardement ionique la jumelle 38 notamment les surface externes 68 des entailles 64 dans la position d'ouverture. L'angle d'incidence du faisceau d'ions par rapport à la surface externe à traiter est compris entre 0 et 45°, ici de 20°.

Lors de cette étape de bombardement ionique, on déplace de façon continue, grâce aux moyens de guidage et de déplacement, la jumelle 38 sensiblement parallèlement à la direction X par rapport au dispositif 44 de façon à exposer l'intégralité de la surface externe 68 des entailles 64. Le déplacement de la jumelle 38 par rapport au dispositif 44 est réalisée dans une chambre à vide dans laquelle la pression est sensiblement égale à $10^{-3}$ mbar. La vitesse de déplacement est telle que le temps de traitement par cm$^2$ de jumelle 38 est sensiblement égal à 2 secondes. En l'espèce, le bombardement ionique est réalisé réalisé par des micro-sources qui peuvent être basées, par exemple, sur une technologie filamentaire ou sur une technologie type ECR (Electron Cylonic Resonance) avec des ions multi-énergie d'azote. De par leur très faible taille, ces micro-sources permettent de concevoir un dispositif dont l'encombrement est peu important. En variante, plusieurs faisceau d'ions peuvent être utilisés en série de façon à obtenir une intensité de traitement adaptée en fonction de la vitesse de déplacement de la jumelle 38. En fonction notamment des conditions de réglage des sources, du nombre de sources et de la vitesse de déplacement de la jumelle 38, on peut implanter, dans le matériau, entre 10$^{14}$ et 10$^{16}$ ions/cm$^2$. La tension d'extraction est comprise entre 35kV et 100kV, ici 50 kV.

On obtient alors la jumelle 10 représentée sur la figure 7. La partie 29 de la surface externe 25 à partir de laquelle le matériau M s'étend présente une épaisseur superficielle présentant une réticulation accrue.

Ensuite, on retourne la jumelle 38 par rapport au plan médian longitudinal T au moyen du dispositif 43 de retournement de la jumelle 38.

Puis, dans une deuxième étape de positionnement de la jumelle 38 analogue à la première étape de positionnement, on positionne la jumelle 38 par rapport au dispositif 45 de génération d'un faisceau d'ions. Lors de cette étape, on déplace chaque organe 10 nu l'un par rapport à l'autre au moyen du dispositif de déplacement 47 de sorte que la surface externe 68 des entailles 66 à traiter par bombardement ionique soit exposée au faisceau d'ions généré par le dispositif 45.

Ensuite, dans une deuxième étape de traitement par bombardement ionique, on traite par bombardement ionique la jumelle 38 notamment les surfaces externes 68 des entailles 66 dans la position d'ouverture. La partie 28 de la surface externe 25 à partir de laquelle le matériau M s'étend présente une épaisseur superficielle présentant une réticulation accrue.

Puis, dans l'étape de revêtement de la surface externe 32, on dépose le revêtement 30 sur la surface externe 25 de l'organe 10.

Enfin, dans une étape de refente, on sépare chaque précurseur 48A, 48B de l'élément de liaison sacrificiel 50 au moyen du dispositif 48 qui vient déchirer le pont de matière 67.

Dans une variante, illustrative, représentée à la figure 9, l'élément sacrificiel 50 entre les organes d'essuyage 48A, 48B est optionnel, il permet notamment un meilleur guidage de la jumelle 38. Lorsqu'il n'y a pas d'élément 50, il n'y a qu'une seule pré-découpe entre chaque chaque organe d'essuyage 48A, 48 B de part et d'autre du plan longitudinal L. On peut également envisager de traiter toute la lèvre, voir l'intégralité de la surface de la pièce et non seulement les parties situées au voisinage des entailles.

Nous allons maintenant commenter les résultats expérimentaux démontrant l'effet technique du procédé selon l'invention.

On dispose d'une jumelle réalisée dans un matériau à base d'élastomère(s), ici en caoutchouc naturel.

L'échantillon A correspond à un organe d'essuyage fabriqué par le procédé selon l'invention décrit ci-dessus mais au cours duquel on a omis l'étape de revêtement.

L'échantillon B correspond à un organe dépourvu de revêtement fabriqué au cours d'un procédé dans lequel on découpe l'entaille après avoir bombardé ioniquement la jumelle dont est issu l'organe.

L'échantillon C correspond à un organe 10 d'essuyage fabriqué par le procédé selon l'invention décrit ci-dessus.

L'échantillon D correspond à un organe comprenant un revêtement tel que décrit ci-dessus et fabriqué au cours d'un procédé dans lequel on découpe l'entaille après avoir bombardé ioniquement la jumelle dont est issu l'organe.

Dans tous les cas, on bombarde ioniquement la jumelle sous atmosphère de diazote à une tension d'extraction de 50 kV à une pression de travail de 10$^{-3}$ bar et avec un angle d'incidence de 10°.

Les performances acoustiques des échantillons sont testées au moyen d'un test permettant de quantifier les occurrences de bruit de vibration de chaque échantillon déplacé en translation sur une vitre plane à des vitesses et en appliquant des pressions prédéterminées simulant des conditions d'usage en régime lubrifié. Le test est décrit en détails dans la publication « Wiper rubber blade squeal noise test: methodology for its characterisation and influential factors study » par A. Sanon et présenté lors du congrès « Automobile and Railroad comfort, acousitcs, vibrations & thermal issues » tenu en octobre 2010.

*Exemple 1: effet des caractéristiques du procédé sur la durabilité des performances acoustiques*

Les performances acoustiques sont testées sur des échantillons neufs (occurrence du bruit initial) et sur des échantillons usés (occurrence du bruit après 50000 cycles). L'usure des échantillons est réalisée au moyen d'une machine de friction alternative déplaçant un carré de glace de 10 cm$^2$ sur une course de 10 cm. L'échantillon est positionné en appui sur la glace avec une pression de 15g.cm$^{-1}$ et la vitesse est de 45 allers/retours (un cycle) par minute.

Tableau 1: comparaison des occurrences de bruit de vibration obtenues avec différents organes d'essuyages.

| Echantillon | Etape de pré-refente avant ou après le bombardement ionique | Revêtement | Occurrence du bruit initial (%) | Occurrence du bruit après 50000 cycles (%) |
|---|---|---|---|---|
| A | Etape de découpage de l'entaille avant le bombardement ionique | Aucun | 30 | 45 |
| B | Etape de découpage de l'entaille après le bombardement ionique | Aucun | 40 | 60 |
| C | Etape de découpage de l'entaille avant le bombardement ionique | Revêtement graphité | 0 | 17 |
| D | Etape de découpage de l'entaille après le bombardement ionique | Revêtement graphité | 0 | 32 |

En comparant d'une part, les échantillons A et B et d'autre part, les échantillons C et D, le tableau 1 montre que lorsqu'on bombarde ioniquement l'entaille, l'occurrence du bruit de vibration diminue. Ainsi, en effectuant l'étape de bombardement ionique après l'étape de pré-refente, on améliore le confort sonore de l'occupant du véhicule quelque soit l'usure de l'organe.

En comparant d'une part, les échantillons A et C et d'autre part, les échantillons B et D, le tableau 1 montre que la présence d'un revêtement, notamment un revêtement graphité, réduit également l'occurrence du bruit de vibration. Ainsi, la présence d'un revêtement améliore le confort sonore de l'occupant du véhicule quelle que soit l'usure de l'organe.

En outre, le tableau 1 montre que la combinaison de l'ordre des étapes de pré-refente et de bombardement ionique et de l'utilisation du revêtement a un effet synergique de réduction de l'occurrence du bruit de vibration. Cet effet synergique est notamment présent lorsque l'organe présente une usure avancée. En effet, sans revêtement, la réduction du bruit de vibration par rapport à l'échantillon B est de l'ordre de 25-30 % pour l'échantillon A fabriqué avec un procédé au cours duquel on bombarde ioniquement l'entaille. Avec un revêtement, la réduction du bruit de vibration par rapport à l'échantillon D est de l'ordre de 50 % pour l'échantillon C fabriqué avec un procédé au cours duquel on bombarde ioniquement l'entaille.

*Exemple 2: effet des caractéristiques du procédé sur l'usure*

Les échantillons A à D sont usés au moyen de la machine de friction alternative décrite dans l'exemple 1. L'usure est suivie toutes les heures. On détermine le nombre de cycles nécessaires pour obtenir un volume usé de 0,5 $mm^3$. Ce volume correspond à une usure significative au-delà de laquelle les performances d'essuyage sont dégradées.

Tableau 2: comparaison des résistances à l'usure (nombre de cycle pour atteindre 0.5mm3 d'usure) obtenues avec différents organes d'essuyages.

| Echantillon | Etape de pré-refente avant ou après le bombardement ionique | Revêtement | Nombre de cycles pour une usure de 0,5 cm3 |
|---|---|---|---|
| A | Etape de découpage de l'entaille avant le bombardement ionique | Aucun | 48600 |
| B | Etape de découpage de l'entaille après le bombardement ionique | Aucun | 37800 |
| C | Etape de découpage de l'entaille avant le bombardement ionique | Revêtement graphité | 72900 |
| D | Etape de découpage de l'entaille après le bombardement ionique | Revêtement graphité | 51300 |

En comparant d'une part, les échantillons A et B et d'autre part, les échantillons C et D, le tableau 1 montre que lorsqu'on bombarde ioniquement l'entaille, la résistance à l'usure augmente. Ainsi, en effectuant l'étape de bombardement ionique après l'étape de pré-refente, on améliore la résistance de l'organe.

En comparant d'une part, les échantillons A et C et d'autre part, les échantillons B et D, le tableau 1 montre que la présence d'un revêtement, notamment un revêtement graphité, améliore la résistance à l'usure. Ainsi, la présence d'un revêtement améliore la résistance de l'organe.

En outre, le tableau 1 montre que la combinaison de l'ordre des étapes de pré-refente et de bombardement ionique et de l'utilisation du revêtement a un effet synergique d'augmentation de la résistance à l'usure. En effet, sans revêtement, l'augmentation de la résistance à l'usure par rapport à l'échantillon B est de l'ordre de 30 % pour l'échantillon A fabriqué avec un procédé au cours duquel on bombarde ioniquement l'entaille. Avec un revêtement, l'augmentation de la résistance à l'usure par rapport à l'échantillon D est de l'ordre 50 % pour l'échantillon C fabriqué avec un procédé au cours duquel on bombarde ioniquement l'entaille.

Tableau 2: comparaison des résistances à l'usure (nombre de cycle pour atteindre 0.5mm3 d'usure) obtenues avec différents organes d'essuyages.

| Echantillon | Etape de pré-refente avant ou après le bombardement ionique | Revêtement | Nombre de cycles pour une usure de 0,5 cm3 |
|---|---|---|---|
| A | Etape de découpage de l'entaille avant le bombardement ionique | Aucun | 48600 |
| B | Etape de découpage de l'entaille après le bombardement ionique | Aucun | 37800 |
| C | Etape de découpage de l'entaille avant le bombardement ionique | Revêtement graphité | 72900 |
| D | Etape de découpage de l'entaille après le bombardement ionique | Revêtement graphité | 51300 |

En comparant d'une part, les échantillons A et B et d'autre part, les échantillons C et D, le tableau 1 montre que lorsqu'on bombarde ioniquement l'entaille, la résistance à l'usure augmente. Ainsi, en effectuant l'étape de bombardement ionique après l'étape de pré-refente, on améliore la résistance de l'organe.

En comparant d'une part, les échantillons A et C et d'autre part, les échantillons B et D, le tableau 1 montre que la présence d'un revêtement, notamment un revêtement graphité, améliore la résistance à l'usure. Ainsi, la présence d'un revêtement améliore la résistance de l'organe.

En outre, le tableau 1 montre que la combinaison de l'ordre des étapes de pré-refente et de bombardement ionique et de l'utilisation du revêtement a un effet synergique d'augmentation de la résistance à l'usure. En effet, sans revêtement, l'augmentation de la résistance à l'usure par rapport à l'échantillon B est de l'ordre de 30 % pour l'échantillon A fabriqué avec un procédé au cours duquel on bombarde ioniquement l'entaille. Avec un revêtement, l'augmentation de la résistance à l'usure par rapport à l'échantillon D est de l'ordre 50 % pour l'échantillon C fabriqué avec un procédé au cours duquel on bombarde ioniquement l'entaille.

**Revendications**

**1.** Procédé de fabrication d'un organe (10) d'essuyage en matériau à base d'élastomère(s) à partir d'une jumelle (38) d'organes (10) d'essuyage joints entre eux, la jumelle (38) étant pré-refendue par quatre entailles (64, 66) symétriques deux à deux par rapport aux plans médian transversal (T) et longitudinal (L), des première entailles (64) étant disposées du côté opposé à des secondes entailles (66) par rapport au plan médian longitudinal (T) et étant séparées par un pont de matière résiduel (67) visant à permettre une séparation ultérieure des organes (10) l'un de l'autre, procédé dans lequel on traite par bombardement ionique au moins une partie (28, 29) d'une surface externe (68) de l'entaille (64, 66), le bombardement ionique est réalisé avec une tension d'extraction comprise entre 35 et 100 kV afin que ladite au moins une partie (28, 29) présente une réticulation accrue sur une épaisseur (E') superficielle inférieure à 5 $\mu$m en partant de ladite surface externeles organes de la jumelle (38) étant mobiles l'un par rapport à l'autre entre une position d'ouverture de l'entaille (64, 66) dans laquelle la partie de la surface externe (68) est exposée au traitement par bombardement ionique et une position de fermeture de l'entaille (64, 66) dans laquelle la partie de la surface externe (68) est masquée, on traite par bombardement ionique la partie de la surface externe (68) de l'entaille (64, 66) dans la position d'ouverture.

**2.** Procédé selon la revendication 1, dans lequel le bombardement ionique est effectué au moyen de faisceaux d'ions issus de gaz tels que l'hélium, le néon, le krypton, l'argon, le xénon, le dioxygène ou le diazote, seuls ou en mélange.

**3.** Procédé selon la revendication 1 ou 2, dans lequel on dépose un revêtement (30) visant à réduire la friction sur une surface externe (25) de la jumelle (38) d'organes (10) après l'étape de traitement par bombardement ionique.

4. Procédé selon l'une quelconque des revendications précédentes comportant, après l'étape de bombardement ionique ou de dépôt du revêtement (30), une étape de refente de la jumelle (38).

5. Procédé selon l'une quelconque des revendications précédentes, dans lequel on implante entre $10^{14}$ et $10^{16}$ ions/cm$^2$ dans le matériau.

6. Jumelle (38) d'organes d'essuyage en matériau à base d'élastomère(s), **caractérisée en ce qu'**elle comprend quatre entailles (64, 66) symétriques deux à deux par rapport aux plans médian transversal (T) et longitudinal (L), des première entailles (64) étant disposées du côté opposé à des secondes entailles (66) par rapport au plan médian longitudinal (T) et étant séparées par un pont de matière résiduel (67) et lesdites entailles présentant au moins une partie (28, 29) d'une surface externe (68) à partir de laquelle le matériau à base d'élastomère(s) s'étend, ladite surface externe présentant une réticulation accrue sur une épaisseur (E') superficielle inférieure à 5 μm en partant de ladite surface externe.

7. Organe d'essuyage (10) comportant un matériau à base d'élastomère(s), susceptible d'être obtenu par le procédé selon l'une quelconque des revendications 1 à 5.

8. Dispositif d'essuyage (8) comportant un organe d'essuyage (10) selon la revendication précédente.

9. Utilisation d'un procédé selon l'une quelconque des revendications 1 à 5 pour augmenter la dureté et la résistance à l'abrasion du revêtement (30) et/ou du matériau d'un organe d'essuyage (10) tel que défini dans la revendication 7, cette augmentation ayant pour effet de réduire le bruit que l'organe (10) est susceptible de produire en frottant sur la surface à essuyer, l'organe (10) permettant donc d'améliorer le confort sonore de l'occupant du véhicule.


**Patentansprüche**

1. Verfahren zur Herstellung eines Wischerelements (10) aus einem Material auf Basis von Elastomer(en) aus einem Paar (38) von miteinander verbundenen Wischerelementen (10), wobei das Paar (38) durch vier zwei und zwei zu den Quer-(T) und Längsmittelebenen (L) symmetrische Kerben (64, 66) vorgespalten sind, wobei erste Kerben (64) auf der gegenüberliegenden Seite von zweiten Kerben (66) in Bezug zur Längsmittelebene (T) angeordnet und durch eine Restmaterialbrücke (67) getrennt sind, die eine spätere Trennung der Elemente (10) voneinander ermöglichen soll, wobei bei dem Verfahren mindestens ein Teil (28, 29) einer Außenfläche (68) der Kerbe (64, 66) durch Ionenbeschuss behandelt wird, wobei der Ionenbeschuss mit einer Extraktionsspannung zwischen 35 und 100 kV durchgeführt wird, damit der mindestens eine Teil (28, 29) eine höhere Vernetzung auf einer Oberflächendicke (E') von weniger als 5 μm ausgehend von der Außenfläche aufweist, wobei die Elemente des Paars (38) zueinander zwischen einer Öffnungsposition der Kerbe (64, 66), in der der Teil der Außenfläche (68) der Behandlung durch Ionenbeschuss ausgesetzt ist, und einer Verschlussposition der Kerbe (64, 66), in der der Teil der Außenfläche (68) verdeckt ist, beweglich sind, wobei der Teil der Außenfläche (68) der Kerbe (64, 66) in der Öffnungsposition durch Ionenbeschuss behandelt wird.

2. Verfahren nach Anspruch 1, bei dem der Ionenbeschuss mit Hilfe von Ionenstrahlen durchgeführt wird, die von Gasen wie Helium, Neon, Krypton, Argon, Xenon, Disauerstoff oder Distickstoff allein oder im Gemisch stammen.

3. Verfahren nach Anspruch 1 oder 2, bei dem eine Verkleidung (30) aufgebracht wird, die die Reibung auf einer Außenfläche (25) des Paars (38) von Elementen (10) nach dem Behandlungsschritt mit Ionenbeschuss verringern soll.

4. Verfahren nach einem der vorhergehenden Ansprüche, umfassend nach dem Schritt des Ionenbeschusses und des Aufbringens der Verkleidung (30) einen Schritt der Trennung des Paars (38).

5. Verfahren nach einem der vorhergehenden Ansprüche, bei dem zwischen $10^{14}$ und $10^{16}$ Ionen/cm$^2$ in das Material implantiert werden.

6. Paar (38) von Wischerelementen aus einem Material auf Basis von Elastomer(en), **dadurch gekennzeichnet, dass** es vier zwei und zwei zu den Quer-(T) und Längsmittelebenen (L) symmetrische Kerben (64, 66) umfasst, wobei erste Kerben (64) auf der gegenüberliegenden Seite von zweiten Kerben (66) in Bezug zur Längsmittelebene (T) angeordnet und durch eine Restmaterialbrücke (67) getrennt sind, und wobei die Kerben mindestens einen Teil (28, 29) einer Außenfläche (68) aufweisen, von dem aus sich das Material auf Basis von Elastomer(en) erstreckt, wobei die Außenfläche eine höhere Vernetzung auf einer Oberflächendicke (E') von weniger als 5 μm ausgehend von der Außenfläche aufweist.

**7.** Wischerelement (10), umfassend ein Material auf Basis von Elastomer(en), das geeignet ist, durch das Verfahren nach einem der Ansprüche 1 bis 5 erhalten zu werden.

**8.** Wischervorrichtung (8), umfassend ein Wischerelement (10) nach dem vorhergehenden Anspruch.

**9.** Verwendung eines Verfahrens nach einem der Ansprüche 1 bis 5, um die Häre und die Abriebfestigkeit der Verkleidung (30) und/oder des Materials eines Wischerelements (10), wie in Anspruch 7 definiert, zu erhöhen, wobei diese Erhöhung bewirkt, dass das Geräusch, das das Element (10) beim Reiben auf der zu wischenden Fläche erzeugen kann, verringert wird, wobei es das Element (10) somit ermöglicht, den Geräuschkomfort für den Insassen des Fahrzeugs zu verbessern.

**Claims**

**1.** A process for manufacturing a wiping member (10) made of a material based on elastomer(s) starting from a pair (38) of wiping members (10) joined together, the pair (38) being pre-split by four notches (64, 66) symmetrical in pairs with respect to the transverse (T) and longitudinal (L) median planes, first notches (64) being positioned on the opposite side to second notches (66) with respect to the longitudinal median plane (T) and being separated by a bridge of residual material (67) allowing a subsequent separation of the members (10) from one another, process wherein at least one portion (28, 29) of an outer surface (68) of the notch (64, 66) is treated by ion bombardment, the ion bombardment is carried out with an extraction voltage comprised between 35 kV and 100 kV so said at least one portion (28, 29) has an increased crosslinking over a superficial thickness (E') of less than 5 μm starting from said outer surface, the members of the pair (38) being mobile with respect to one another between an open position of the notch (64, 66) wherein the portion of the outer surface (68) is exposed to the ion bombardment treatment and a closed position of the notch (64, 66) wherein the portion of the outer surface (68) is hidden, the portion of the outer surface (68) of the notch (64, 66) is treated by ion bombardment in the open position.

**2.** The process as claimed in claim 1, wherein the ion bombardment is carried out by means of beams of ions resulting from gases such as helium, neon, krypton, argon, xenon, oxygen or nitrogen, alone or as a mixture.

**3.** The process as claimed in claim 1 or 2, wherein a coating (30) that aims to reduce the friction is deposited on an outer surface (25) of the pair (38) of members (10) after the step of ion bombardment treatment.

**4.** The process according to any one of the preceding claims, comprising, after the step of ion bombardment or of deposition of the coating (30), a step of splitting the pair (38).

**5.** The process according to any one of the preceding claims, in which between $10^{14}$ and $10^{16}$ ions/cm$^2$ are implanted in the material.

**6.** A pair (38) of wiping members made of a material based on elastomer(s), **characterized in that** it comprises four notches (64, 66) that are symmetrical in pairs with respect to the transverse (T) and longitudinal (L) median planes, first notches (64) being positioned on the opposite side to second notches (66) with respect to the longitudinal median plane (T) and being separated by a bridge of residual material (67) and said notches having at least one portion (28, 29) of an outer surface (68) from which the material based on elastomer(s) extends, said outer surface having an increased crosslinking over a superficial thickness (E')of less than 5 μm starting from said outer surface.

**7.** A wiping member (10) comprising a material based on elastomer(s), capable of being obtained by the process as claimed in any one of claims 1 to 5.

**8.** A wiping device (8) comprising a wiping member (10) as claimed in the preceding claim.

**9.** The use of a process according to any one of Claims 1 to 5 to increase the hardness and the abrasion resistance of the coating (30) and/or the material of a wiping member (10) as defined in claim 7, this increase having the effect of reducing the noise nuisances that may be produced during the friction of a wiping member (10) with the surface to be wiped, the wiping member (10) improving the sound comfort of the vehicle occupant.

**Fig. 1a**

X

8

10

**Fig. 1b**

10

**Fig. 2**

11

12

14

25

10

30

E    E

E'

20

27

18

26

22    28    16

24

29

**Fig. 3**

34

-44-

-40-

-45-

-36-    -41-    -46-    -43-    -47-    -48-

Fig. 4

Fig. 5

Fig. 8

**Fig. 6**

**Fig. 7**

**Fig. 9**

**EP 2 652 017 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020164422 A
- FR 2899242 A
- US 20060042745 A
- US 5883168 A